# EUROPÄISCHE PATENTSCHRIFT

(11) **EP 3 434 953 B1**
(45) Veröffentlichungstag und Bekanntmachung des Hinweises auf die Patenterteilung: **24.11.2021**
(21) Anmeldenummer: 18185458.9
(22) Anmeldetag: 25.07.2018
(51) Int. Cl.: F16L 25/00, F23J 13/04, F16L 37/113

(54) **SICHERUNGSRING, ABGASROHRSYSTEM MIT SICHERUNGSRING**
RETAINING RING, PIPE SYSTEM FOR DISCHARGING EXHAUST GASES WITH RETAINING RING
BAGUE DE SÉCURITÉ, SYSTÈME DE TUBE DE GAZ D'ÉCHAPPEMENT POURVU DE BAGUE DE SÉCURITÉ

(30) Priorität: 25.07.2017 DE 102017116818
(43) Veröffentlichungstag der Anmeldung: 30.01.2019
(73) Patentinhaber: Bächle, Stefano, 8597 Landschlacht (CH)
(72) Erfinder: Bächle, Stefano, 8597 Landschlacht (CH)
(74) Vertreter: Patent- und Rechtsanwälte Behrmann Wagner PartG mbB

(56) Entgegenhaltungen:
- EP-A1- 3 086 012
- WO-A1-01/79738
- DE-A1-102013 101 172
- DE-B3-102005 031 871
- DE-B3-102012 106 232
- JP-A- 2003 106 491

## Beschreibung

Die Erfindung betrifft einen Sicherungsring gemäß dem Oberbegriff des Anspruchs 1 zum, insbesondere lösbaren, axialen Sichern eines zumindest abschnittsweise flexiblen Kunststoff-Abgasrohres an einem einen Umfangswulst aufweisenden Muffenrohr, umfassend einen Hintergriffabschnitt zum Hintergreifen des Umfangswulstes am Außenumfang des Muffenrohrs nach radial innen sowie einen axial benachbarten, Befestigungsmittel zur formschlüssigen, fixierenden Wechselwirken mit monolithisch an dem Abgasrohr ausgebildeten Gegenbefestigungsmitteln aufweisenden Befestigungsabschnitt.

Ferner betrifft die Erfindung ein Abgasrohrsystem gemäß Anspruch 6, umfassend ein einen Umfangswulst sowie radial innerhalb des Umfangswulstes eine nach radial innen offene, mit einer elastomeren Lippendichtung ausgefüllte, innere Ringnut aufweisendes Muffenrohr, insbesondere aus Kunststoff, sowie einen nach dem Konzept der Erfindung ausgebildeten Sicherungsring.

Aus der EP 1 024 321 B1 ist ein Abgasrohr aus Kunststoff mit abwechselnd angeordneten starren Glattrohr- und flexiblen, als Wellrohrabschnitte ausgebildeten Biegeabschnitten bekannt. Das bekannte Abgasrohr bildet einen Rohrstrang, aus dem Abgasrohrabschnitte (Trennabschnitte), umfassend jeweils zwei endseitige, starre Glattrohrabschitte und mindestens einen Biegerohrabschnitt, beispielsweise durch Sägen oder Schneiden heraustrennbar sind, insbesondere um winklig zueinander angeordnete oder parallel versetzte starre Rohrstücke (flexibel) über den Abgrasrohrabschnitt miteinander zu verbinden, in dem die jeweils einen Einführabschnitt bildenden Glattrohrabschnitte des Abgasrohres in entsprechende Muffen der versetzt zueinander angeordneten starren Muffenabgasrohe eingeschoben werden.

Die Dichtung des Abgasrohres erfolgt über in Ringnuten der benachbart zu dem Abgasrohr angeordneten Muffenrohre aufgenommene Dichtungen. Zur axialen Sicherung des Abgasrohres mit seinen Glattrohr- und Biegerohrabschnitten an dem Muffenrohr ist es bekannt, in die die Dichtung aufnehmende Ringnut des Muffenrohres einen Federring anzuordnen, der sich radial innen an einen Glattrohrabschnitt des Abgasrohres abstützt und dieses klemmend fixiert.

In der EP 2 762 761 B1 ist ein gegenüber dem zuvor beschriebenen Abgasrohr verbessertes Abgasrohr beschrieben, bei welchem die Fixierung des Abgasrohres an einen benachbart zu dem Abgasrohr angeordneten Muffenrohr nicht mehr über ein Federring realisiert werden muss, sondern zu diesem Zweck an dem Abgasrohr, genauer gesagt an den Glattrohrabschnitten Bajonettverschlussmittel angeformt sind, über die eine in axiale Richtung wirksame Formschlussverbindung zu dem benachbarten Muffenrohr über ein einteiliges, hülsen- bzw. ringförmiges Sicherungselement (Sicherungsring) herstellbar ist. Dieses als Sicherungsring ausgebildete, einteilige Sicherungselement umfasst einen die Bajonettverschlussmittel aufweisenden Befestigungsabschnitt und axial benachbart hierzu einen monolithisch damit ausgebildeten Hintergriffabschnitt zum Hintergreifen des Umfangswulstes des Muffenrohres nach radial innen. Der Befestigungsabschnitt des Sicherungsrings umfasst in radialer Richtung federnde Laschen zum Hintergreifen des Umfangswulstes des Muffenrohres und zum Ermöglichen eines axialen Aufschiebens des Sicherungsringes auf das Muffenrohr.

Ein noch weiter verbessertes, abschnittsweise flexibles Abgasrohr ist in der EP 3 086 012 A1 beschrieben. Dieses weist zusätzlich zu dem Biegerohrabschnitten und den starren Glattrohrabschnitten eine Mehrzahl von Muffenrohrabschnitten auf, die bei entsprechender Abtrennung eines Abgasrohrabschnittes einen endseitigen Muffenrohrabschnitt bilden bzw. das Abgasrohr zu einem Muffenrohr umgestalten können. Die Sicherung zweier solcher Abgasrohre aneinander, von denen eines als Muffenrohr ausgebildet ist, erfolgt über einen einteiligen Sicherungsring analog zu der in der EP 2 762 761 B1 beschriebenen Lösung.

Nachteilig bei den bekannten axialen Sicherungsringen ist, dass deren radial federnde Laschen des Hintergriffabschnitts beim Einziehen von zwei über den Sicherungsring miteinander verbundenen Rohren durch anstoßen des Sicherungsrings an einem Hindernis von dem Muffenrohr abgezogen werden kann, wodurch keine axiale formschlüssige Sicherung der aneinander festgelegten Abgasrohre mehr gegeben ist.

Die DE 10 2013 101 172 A1 betrifft ein Abgasrohrsystem mit einem, insbesondere aus Kunststoff bestehenden, Abgasrohr sowie mit axialen Sicherungsmitteln zum Fixieren des Abgasrohres an einem, bevorzugt als Muffenrohr ausgebildeten Abgas-Rohrstück, wobei das Abgasrohr axial abwechselnd angeordnete Glattrohr- und biegbare Wellrohrabschnitte aufweist. Dabei ist vorgesehen, dass die Sicherungsmittel ein erstes und ein zweites Bauteil aufweisen, und dass das erste Bauteil erste Formschlussmittel zum Herstellen eines Formschlusses mit dem Abgasrohr und das zweite Bauteil zweite Formschlussmittel zum Herstellen eines Formschlusses mit dem Abgas-Rohrstück aufweist und dass die Sicherungsmittel Fixiermittel zum aneinander Fixieren des ersten und des zweiten Bauteils aufweisen.

Die DE 10 2005 031 871 B3 beschreibt eine Anordnung zum Anschluß eines Wellschlauches (2) an einem hohlzylindrischen Anschlußstutzen gegen ein Abziehen von dieser sichernden Haltevorrichtung sowie einer die Anordnung gegen ein Heraustreten eines in dem Wellschlauch und der Anordnung geführten Fluids absichernden Dichtung zeichnet sich dadurch aus, daß der Anschlußstutzen an seinem dem anzuschließenden Wellschlauch zugewandten Ende einen Anschlußnippel, der gegenüber dem Anschlußstutzen einen geringen Außendurchmesser aufweist und der wiederum dem lichten Innendurchmesser des anzuschließenden Wellschlauches entspricht, und wobei die Dichtung in der Anordnung als ein auf dem Anschlußstutzen sitzender und den Anschlußnippel in einem radialen Abstand von seinem Außenumfang übergreifendes elastisches und einen hohlzylindrischen Innenraum aufweisendes schlauchförmiges Formstück ausgebildet ist und wobei die Haltevorrichtung als eine die Dichtung umgebende und auf diese axial verschiebbare Hülse ausgebildet ist.

Die WO 01/79738 A1 lehrt eine Verbindungsvorrichtung zum Befestigen an einem Element, insbesondere an einem flexiblen Wellenrohr, das mit einer Reihe von beabstandeten Ringnuten ausgebildet ist, wobei die Vorrichtung erste und zweite Rohrkörper umfasst, die im Gebrauch mit dem Rohr gekoppelt sind, das in einem offenen Ende des ersten Körpers aufgenommen ist. Der erste Körper weist eine Vielzahl von elastischen Laschen mit entsprechenden nach innen gerichteten Vorsprüngen an ihren Enden auf, die in einer der Nuten aufgenommen werden, um das Rohr zu greifen. Die beiden Körper können relativ winklig zwischen einer neutralen Position der Vorrichtung, in der das Rohr nur durch die Elastizität der Laschen gehalten wird, einer entriegelten Position, in der die Laschen aus dem Rohr gelöst werden, und einer verriegelten Position, in der die Laschen in einen verriegelnden Eingriff mit dem Rohr gezwungen werden, bewegt werden, wobei die Bewegung der Laschen durch Kurvenformationen (29) gesteuert wird, die sich von der Endfläche des zweiten Körpers (11) erstrecken.

Die JP 2003 106491 A beschäftigt sich mit einer Bereitstellung einer Verbindungsarmatur, die in der Lage ist, eine unvollkommene Verbindung zu verhindern und ein Fressen zwischen einem Auskleidungsteil und einem Verbindungsteil zu verhindern.

Die DE 10 2012 106 232 B3 betrifft einen Rohrverbinder zum axialen miteinander Verbinden eines ersten Abgasmuffenrohres mit einem zweiten Abgasrohr umfassend zwei mit Fixiermitteln zu einem geschlossenen Ring verbindbare Teilringe zum Umgreifen eines Verbindungsbereichs der Rohre, wobei zumindest einer der Teilringe im Bereich eines ersten Axialendes nach radial innen weisende erste Eingriffsmittel zum radialen Hintergreifen einer radial außen vorstehenden Dichtungsaufnahme des ersten Abgasmuffenrohrs auf einer ersten Dichtungsaufnahmenaxialseite aufweist und wobei mindestens einer der Teilringe an einem von dem ersten Axialende abgewandten zweiten Axialendenach radial innen weisende zweite Eingriffsmittel zur axialen Fixierung des zweiten Abgasrohrs aufweist. Dabei ist vorgesehen, dass Vorfixiermittel zur Vormontage des Rohrverbinders an dem ersten Abgasmuffenrohr vorgesehen sind, mit denen die Teilringe zu einem Ring vorfixierbar sind, wobei der Ring in einem resultierenden Vorfixierzustand einen größeren Durchmesser aufweist als im mit den Fixiermitteln herstellbaren Fixierzustand und dass in einem Bereich axial zwischen den ersten und zweiten Eingriffsmitteln Axialsicherungsmittel zum radialen Hintergreifen der Muffe des ersten Abgasmuffenrohres auf einer von der ersten Dichtungsaufnahmenaxialseite abgewandten zweiten Dichtungsaufnahmenaxialseite vorgesehen sind, um den Rohrverbinder im Vorfixierzustand axial an der Muffe des ersten Abgasmuffenrohres zu sichern.

Ausgehend von dem vorgenannten Stand der Technik liegt der Erfindung die Aufgabe zu Grunde, einen verbesserten Sicherungsring zum aneinander festlegen von zwei Abgasrohren anzugeben, bei dem die Gefahr des Lösens der axialen Sicherungsfunktion, das heißt des in axialer Richtung wirkenden Formschlusses zum Muffenrohr reduziert ist.

Ferner besteht die Aufgabe darin, ein einen derartigen Sicherungsring umfassendes Abgasrohrsystem anzugeben.

Diese Aufgabe wird hinsichtlich des Sicherungsrings mit den Merkmalen des Anspruchs 1 gelöst.

Hinsichtlich des Abgasrohrsystems wird die Aufgabe mit dem Merkmals des Anspruchs 6 gelöst.

Vorteilhafte Weiterbildungen der Erfindung sind in den Unteransprüchen angegeben.

In dem Rahmen der Erfindung fallen sämtliche Kombinationen aus zumindest zwei von in der Beschreibung, Ansprüchen und/oder Figuren offenbarten Merkmalen.

Der Erfindung liegt der Gedanke zugrunde, den Sicherungsring nicht wie im Stand der Technik einteilig sondern mehrteilig auszubilden und den Befestigungsabschnitt und den Hintergriffabschnitt bzw. deren Funktionalitäten auf zwei voneinander separate axial benachbarte Bauteile zu verteilen, die über von diesen separate oder bevorzugt integrale, das heißt monolithisch mit dem Befestigungsabschnitt und/oder dem Hintergriffabschnitt ausgebildete Fixiermittel formschlüssig miteinander verbunden bzw. im Falle des Bausatzes miteinander verbindbar, bevorzugt verrastbar sind. Eine solche Ausführungsform ermöglicht eine alternative Ausbildung des Hintergriffabschnitts, bevorzugt ohne im montierten Zustand in radialer Richtung federnde Laschen, um somit die somit die Gefahr eines axialen, unbeabsichtigten Abziehens von dem hintergriffenen Umfangswulst des Muffenrohres beim Einziehen von zwei miteinander verbundenen Rohren in einen Schacht oder dergleichen Hindernis zu reduzieren. Besonders bevorzugt ist das den Hintergriffabschnitt ausbildende Bauteil dabei derart ausgebildet, dass dieses seitlich, das heißt aus radialer Richtung auf das Muffenrohr benachbart zum Umfangswulst aufschiebbar bzw. um das Muffenrohr umlegbar ist. Dies kann beispielsweise bei einer bevorzugten einteiligen Ausgestaltung des den Hintergriffabschnitt ausbildenden Bauteils durch eine axial und radial durchgehende (einfache) Schlitzung realisiert werden, wodurch das Bauteil, insbesondere elastisch soweit in Umfangsrichtung aufgebogen werden kann, dass es aus radialer Richtung auf das Muffenrohr aufschiebbar und dann unter, bevorzugt selbsttätig federnder, Annäherung der in Umfangsrichtung gegenüberliegenden, den Schlitz begrenzenden Flächen des Rings wieder verschließbar ist, wobei bevorzugt ein erneutes Aufweiten des Schlitzes im montierten Zustand durch die Verbindung mit dem bevorzugt umfangsgeschlossenen, den Befestigungsabschnitt ausbildenden, axial beabstandete Bauteil sichergestellt wird. Eine alternative Möglichkeit sieht vor, das den Hintergriffabschnitt ausbildende Bauteil mehrteilig, das heißt aus Teilbauteilen, insbesondere Ringsegmentbauteilen, vorzugsweise ausschließlich zwei Ringsegmentbauteilen auszubilden, die entweder gelenkig, beispielsweise über ein Scharnier miteinander verbunden sind oder an, insbesondere diametral gegenüberliegenden Stellen aneinander fixierbar sind, beispielsweise durch Verrasten oder Verschrauben. Alle diese Lösungen ermöglichen ein seitliches Aufschieben auf das Muffenrohr, was bei dem einteiligen, im Stand der Technik beschrieben Sicherungsring nicht möglich war - dieser musste axial unter federnder Aufweitung der federnden Laschen über den Umfangswulst geschoben werden, wodurch die Gefahr eines axialen Ablösens durch radiales Aufweiten der Federlaschen besteht. Bevorzugt ist ein axialer Endabschnitt des Hintergriffabschnittes des erfindungsgemäßen Sicherungsrings zumindest im mit den Befestigungsabschnitt bildenden Bauteil formschlüssig verbundenen Zustand nicht in radialer Richtung federnd, zumindest nicht soweit, dass ein axiales Abziehen des Sicherungsrings über den Umfangswulst möglich wäre. Auch umfasst dieser Endabschnitt bevorzugt keine, zumindest im vorgenannten, fixierten Zustand, keine radial federnde Lasche. Ganz besonders bevorzugt ist der bevorzugt vorgesehene axial und radial durchgehende Schlitz der einzige endseitige Schlitz des den Hintergriffabschnitt ausbildenden Bauteils.

Das den Befestigungsabschnitt bildende Bauteil wird, wie erwähnt, über, bevorzugt integrale Fixiermittel mit dem den Hintergriffabschnitt ausbildenden Bauteil verbunden, insbesondere verrastet, wobei das den Befestigungsabschnitt ausbildende Bauteil, insbesondere radial innen die Befestigungsmittel trägt, die bevorzugt monolithisch mit diesem ausgebildet sind, erfindungsgemäß in Form von in Umfangsrichtung beabstandeten Bajonettelementen bzw. Bajonettverschlussmitteln, die mit entsprechenden Gegenbefestigungsmitteln, insbesondere Gegenbajonettverschlussmitteln bzw. -elementen durch Verdrehen in Umfangsrichtung relativ zu dem Muffenrohr und den die Gegenbefestigungsmittel ausweisenden Kunststoff-Abgasrohr verbindbar sind, also im Falle der Realisierung von Bajonettverschlussmitteln und Gegenbajonettverschlussmitteln durch eine axiale Steck- und dann anschließende Drehbewegung in Umfangsrichtung.

Wie bereits angedeutet ist es bevorzugt, wenn das den Befestigungsabschnitt ausbildende Bauteil als, insbesondere einteiliger, umfangsgeschlossener Ring ausgebildet ist. Insbesondere bei einer umfangsgeschlossenen Gestaltung des Befestigungsabschnitt kann dieser die benachbarten Abschnitte eines bevorzugt geschlitzten, den Hintergriffabschnitt ausbildenden Bauteils zusammenhalten bzw. ein Aufweiten verhindern - auch wird bei einer alternativen Ausführung des den Hintergriffabschnitt ausbildenden Bauteils als aus Teilringsegmenten zusammengesetztes Bauteil dessen Stabilität über den umfangsgeschlossenen Ring des den Befestigungsabschnitt ausbildenden Bauteils verbessert.

Wie ebenfalls bereits angedeutet ist erfindungsgemäß vorgesehen, dass das den Hintergriffabschnitt ausbildende Bauteil als, insbesondere einteiligen, axial und radial durchgehend, insbesondere einfach, geschlitzten Ring auszubilden, wobei der Schlitz so aufweitbar ist, insbesondere elastisch, dass der geschlitzte Ring aus radialer Richtung, das heißt seitlich auf ein Muffenrohr aufschiebbar ist und der Schlitz danach, das heißt bei um das Muffenrohr umgelegten Befestigungsabschnittsbauteil bevorzugt zumindest größtenteils selbsttätig durch rückfedern zumindest weitgehend geschlossen wird, wobei ein erneutes Aufweiten über das den Befestigungsabschnitt ausbildende Bauteil bei entsprechender axialer Fixierung dieses Bauteils mit dem den Hintergriffabschnitt ausbildenden Bauteil sichergestellt wird. Bei einer alternativen Ausführungsform umfasst der Hintergriffabschnitt mehrere Teilbauteile, insbesondere Ringsegmente die entweder nach dem seitlichen Aufschieben auf ein Muffenrohr miteinander verbunden werden können, insbesondere an diametral gegenüberliegenden Stellen bzw. Seiten oder alternativ bereits vor dem Aufschieben gelenkig, beispielsweise über ein Scharniergelenk miteinander verbunden sein können und nach dem Aufschieben nur noch an einer Stelle, insbesondere einer dem Gelenk diametral gegenüberliegenden Stelle miteinander verbunden, beispielsweise verrastet oder verschraubt werden müssen bzw. können. Unabhängig von der konkreten Ausgestaltung des den Hintergriffabschnitt ausbildenden Bauteils ist es bevorzugt, zunächst dieses am Muffenrohr anzuordnen, insbesondere seitlich um dieses umzulegen und daraufhin, insbesondere durch axiales Annähern mit dem den Befestigungsabschnitt bildenden Bauteil formschlüssig zu verbinden, insbesondere zu verrasten. Bei einer weiteren Ausführungsform kann das den Hintergriffabschnitt ausbildende Bauteil als insbesondere einteiliger Ring ausgebildet sein, welcher an einem Abschnitt des Rings eine Sicherungseinrichtung, umfassend ein Verbindungselement und ein Aufnahmeelement, aufweist, mittels derer sich der Ring von einem umfangoffenen Zustand in einen umfanggeschlossenen Zustand und umgekehrt überführen lässt. Dadurch lässt sich der Ring dann in dem umfangoffenen Zustand sehr einfach auf ein Muffenrohr aufschieben. Nach erfolgtem Aufschieben kann der Ring durch ein Verbinden des Verbindungselements mit dem Aufnahmeelement in den umfanggeschlossenen Zustand überführt werden. Somit kann der Ring während einer Vormontage desselben durch Herstellen des umfanggeschlossenen Zustandes gegen eine Verschiebung in eine axiale Richtung vorgesichtert werden. Sollte der Ring nach Herstellen des umfanggeschlossenen Zustandes noch nicht wie gewünscht an dem Muffenrohr anliegen, so kann das Verbindungselement von dem Aufnahmeelement getrennt und dadurch der Ring zurück in den umfangoffenen Zustand überführt werden, so dass sich der Ring in eine gewünschte Position verschieben lässt. Dabei kann das Verbindungselement bzw. das Aufnahmeelement insbesondere als ein Haken bzw. eine Öse ausgebildet sein, wobei der Haken und die Öse beispielsweise aus einem Kunststoff bestehen können. In diesem Fall kann eine sichere und haltbare Verbindung bzw. ein Herstellen des umfanggeschlossenen Zustandes in sehr kurzer Zeit erfolgen. Jedoch ist es ebenso denkbar als Verbindungselement bzw. Aufnahmeelement eine Rastnase bzw. eine Rastnasenaufnahme oder einen Vorsprung bzw. eine Ausnehmung vorzusehen. In diesem Fall ist eine kostengünstige Ausbildung der Sicherungseinrichtung möglich.

Um ein Hängenbleiben des Sicherungsrings beim Einziehen verbundener bzw. axial gesicherter Rohre in einen Schacht oder dergleichen Hindernis zu reduzieren, ist in Weiterbildung der Erfindung mit Vorteil vorgesehen, dass sich die Außenkontur des Hintergriffabschnitts, das heißt des den Hintergriffabschnitt bildenden Bauteils und/oder des Befestigungsabschnitts, das heißt des den Befestigungsabschnitt ausbildenden Bauteils in voneinander weg weisende Axialrichtungen im Hinblick auf die jeweilige Außendurchmesserabmessung, insbesondere konisch, verjüngend ausgebildet ist. Dies bedeutet, dass sich der Außendurchmesser des Befestigungsabschnitts und/oder des Hintergriffsabschnitts mit zunehmenden axialen Abstand zu einer Kontakt- bzw. Verbindungsstelle der beiden Bauteile reduziert.

Wie erwähnt ist es besonders bevorzugt, wenn die Befestigungsmittel des den Befestigungsabschnitt ausbildenden Bauteils als Bajonettverschlussmittel zur Realisierung einer Steck-Drehverbindung mit entsprechenden Gegenbajonettverschlussmitteln des Abgasrohres ausgebildet sind. Alternativ ist es denkbar, die Befestigungsmittel als Innengewindeabschnitt auszubilden um dann formschlüssig mit einem entsprechenden Außengewindeabschnitt des Abgasrohres durch Verdrehen zusammenwirken zu können, um die axiale Sicherung zu gewährleisten.

Auch im Hinblick auf die konkrete Ausgestaltung der Fixiermittel gibt es unterschiedliche Möglichkeiten. Besonders bevorzugt ist es eine Ausführungsvariante, bei der die Fixiermittel monolithischer Bestandteil der des den Befestigungsabschnitt und/oder des den Hintergriffabschnitt ausbildenden Bauteile/Bauteil sind. Bevorzugt umfassen die Fixiermittel, bevorzugt axiale, Rastfortsätze die mit entsprechenden Rastaufnahmen des axial gegenüberliegenden Bauteil bevorzugt in radialer Richtung, ganz besonders bevorzugt nach radial außen verrastet sind, wobei die Rastaufnahmen bevorzugt durch entsprechende Augen bzw. Durchgangsöffnungen in dem die Rastaufnahmen aufweisenden Bauteil zugänglich sind. Grundsätzlich ist es möglich und bevorzugt, wenn nur an einem der beiden Bauteile Rastfortsätze vorgesehen sind, die mit Rastaufnahmen des jeweils anderen Bauteils bevorzugt in radialer Richtung, ganz besonders bevorzugt nach außen verrastend und damit axial sichernd zusammenwirken. Es jedoch auch eine Ausführungsform möglich, bei der in Umfangsrichtung und/oder radial benachbart axialer Rastfortsätze an beiden Bauteilen vorgesehen sind, derart, dass diese in unterschiedliche Axialrichtungen weisen und mit entsprechenden Rastaufnahmen des jeweils gegenüberliegenden Bauteils, insbesondere durch eine jeweilige Durchgangsöffnung hindurch, bevorzugt in radialer Richtung verrastend zusammenwirken. Bevorzugt sind die Fixiermittel derart ausgebildet, dass diese nicht einen maximalen Außendurchmesser des Sicherungsrings begrenzen sondern gegenüber einem solchen in radialer Richtung nach innen versetzt angeordnet sind. Ganz besonders bevorzugt sind entsprechende Rastaufnahmen an einem sich chronisch verjüngenden Abschnitt des die Rastaufnahmen aufweisenden Bauteils vorgesehen.

Das erfindungsgemäße Abgasrohrsystem umfasst neben dem Muffenrohr einen erfindungsgemäßen, mehrteiligen Sicherungsring, der mit seinem den Hintergriffabschnitt ausbildenden Bauteil den Umfangswulst hintergreift und zwar nach radial innen, um somit bei entsprechender Zugbelastung hin zur Muffenrohröffnung an den Umfangswulst zu ziehen und somit den Sicherungsring axial am Muffenrohr zu sichern. Der Sicherungsring ist axial an dem Umfangswulst vorbeigeführt, so dass das den Befestigungsabschnitt ausbildende Bauteil mit seinem Befestigungsmitteln mit dem axial benachbarten Abgasrohr zusammenwirken kann.

Bevorzugt umfasst das Abgasrohrsystem neben dem Sicherungsring und dem Muffenrohr ein, mehrere axial beabstandete flexible Biegerohrabschnitte aufweisendes Kunststoff-Abgasrohr, welches axial über den Sicherungsring an dem Muffenrohr gesichert, wobei hierzu die Befestigungsmittel des Sicherungsrings mit entsprechenden, insbesondere integralen, das heißt monolithisch mit dem Abgasrohr ausgebildeten Gegenbefestigungsmitteln formschlüssig (axial sichernd) zusammenwirken, wobei das Abgasrohr mit einem endseitigen Glattrohrabschnitt axial in das Muffenrohr, das heißt eine axiale Muffenrohröffnung eingeschoben ist und die Lippendichtung des Muffenrohrs dichtend am Außenumfang des Glattrohrabschnittes anliegt. Im Hinblick auf die konkrete Ausgestaltung der Biegerohrabschnitte gibt es unterschiedliche Möglichkeiten. So können diese beispielsweise als Wellrohrabschnitte, wie in der EP 1 024 321 B1, der EP 2 762 761 B1 oder der EP 3 086 012 A1 beschrieben ausgebildet sein. Auch gibt es im Hinblick auf die Abfolge der Funktionsabschnitte des flexiblen Abgasrohrs unterschiedliche Möglichkeiten - dieses kann wie bevorzugt wie in einer der vorgenannten Druckschriften beschrieben ausgebildet sein, was bevorzugt ist. Auch können zusätzlich oder alternativ zu Wellrohrabschnitten zur Realisierung der Biegerohrabschnitten wie in der noch nicht veröffentlichten deutschen Patentanmeldung DE 10 2017 107 498 beschrieben, Mehrfachbiegeabschnitte als Biegerohrabschnitte vorgesehen sein, die sich durch zwei winklig zueinander verlaufende Gruppen von Biegenuten auszeichnen. Vorstehende Patentanmeldungen und Patente sollen im Hinblick auf die jeweils entsprechende Offenbarung im Hinblick auf die mögliche Ausgestaltung der Biegerohrabschnitte und der Abfolge der Funktionsabschnitte (Biegerohrabschnitte sowie Glattrohrabschnitte und/oder Muffenrohrabschnitte) als zur Offenbarung der vorliegenden Patentanmeldung gehörig gelten und somit beanspruchbar sein.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a bis Fig. 1e: in unterschiedlichen, teilweise geschnittenen Darstellungen und Detailzeichnungen ein bevorzugtes Ausführungsbeispiel eines nach dem Konzept der Erfindung ausgebildeten Abgasrohrsystems mit einem mehrteiligen Sicherungsrings,
- Fig. 2a bis Fig. 2 n: unterschiedliche, teilweise geschnittene und Detailzeichnung eines den Hintergriffabschnitt bildendes Bauteil des Sicherungsrings gemäß den Fig. 1a bis 1e, und
- Fig. 3a bis 3i: unterschiedliche, teilweise geschnittene Darstellung eines den Befestigungsabschnitt des Sicherungsrings gemäß den Fig. 1a bis 1d ausbildenden Bauteils.

In den Figuren sind gleiche Elemente und Elemente mit der gleichen Funktion mit den gleichen Bezugszeigen gekennzeichnet. Die in den Figuren angegebenen Abmessungen und Maße sind rein beispielhaft und beschreiben eine besonders bevorzugte Ausführungsform - selbstverständlich ist die Erfindung hierauf nicht beschränkt. Insbesondere sollen aus den Zeichnungen ersichtliche Details u. a. auch Abmessungsverhältnisse (auch) allgemein als zur Lösung gehörig offenbart gelten und beanspruchbar sein.

In den Figuren ist ein nach dem Konzept der Erfindung ausgebildetes Abgasrohrsystem sowie dessen Bestandteile gezeigt. Dieses umfasst einen mehrteiligen Sicherungsring 1 aus Kunststoff, über den ein Muffenrohr 2 axial an einem abschnittsweise im Bereich von Biegerohrabschnitten flexiblen Kunststoff-Abgasrohr 3 gesichert ist. Das Muffenrohr 2 umfasst am Außenumfang einen umlaufenden Umfangswulst 4, der radial innen eine Ringnut 5 begrenzt, innerhalb derer eine Lippendichtung 6 angeordnet ist, deren Dichtlippen an einem endseitigen Glattrohrabschnitt 7 des Abgasrohres 3 anliegen, welches axial durch eine Muffenrohröffnung 8 geführt ist. Der Sicherungsring umfasst ein einen Befestigungsabschnitt 9 ausbildendes (erstes) Bauteil 10, welches verrastet ist mit einem einen Hintergriffabschnitt 11 ausbildenden (zweiten) Bauteil 12. Die beiden Bauteile 10, 12 sind miteinander verrastet und grenzen axial aneinander an.

Der Befestigungsabschnitt 9 umfasst nach radial innen weisende Befestigungsmittel 13, die vorliegend als Bajonettverschlussmittel ausgebildet sind. Hiervon umfasst der Befestigungsabschnitt 9 mehrere, in Umfangsrichtung beabstandete Befestigungsmittel 13. Den Befestigungsmitteln 13 sind mehrere, monolithisch mit dem Abgasrohr 3 ausgebildete, ebenfalls in Umfangsrichtung beabstandete Gegenbefestigungsmittel 14 in Form hier beispielhaft von Gegenverschlussbajonettelementen zugeordnet.

Das den Hintergriffabschnitt 11 ausbildende zweite Bauteil 12 hintergreift den Umfangswulst 4 in radialer Richtung nach innen, wobei der Sicherungsring 1 insgesamt den Umfangswulst 4 axial überragt bzw. diesen einkapselt.

Am Hintergriffabschnitt 11 sind einteilig mit dem zweiten Bauteil 12 ausgebildete axiale Rastfortsätze 15 ausgebildet, die in radialer Richtung, vorliegend nach außen eingefedert sind in entsprechende Rastaufnahmen 16 (Augen) an dem Befestigungsabschnitt 9 ausbildenden ersten Bauteil 10. Insgesamt sind mehrere in Umfangsrichtung beabstandete axiale Rastfortsätze 15 vorgesehen, die jeweils in eine zugehörige Rastaufnahme des ersten Bauteils 10 eingreifen. Alternativ ist auch eine umgekehrte Anordnung von Rastfortsätzen und Rastelementen, das heißt in Bezug auf die Bauteile 10, 12 vertauschte Anordnung möglich. Auch ist es möglich, dass beide Bauteile 10, 12 jeweils ineinander entgegengesetzten Richtungen weisende axiale Rastfortsätze aufweisen die in entsprechende Rastaufnahmen des jeweils gegenüberliegenden Bauteils 10, 12 federnd eingreifen.

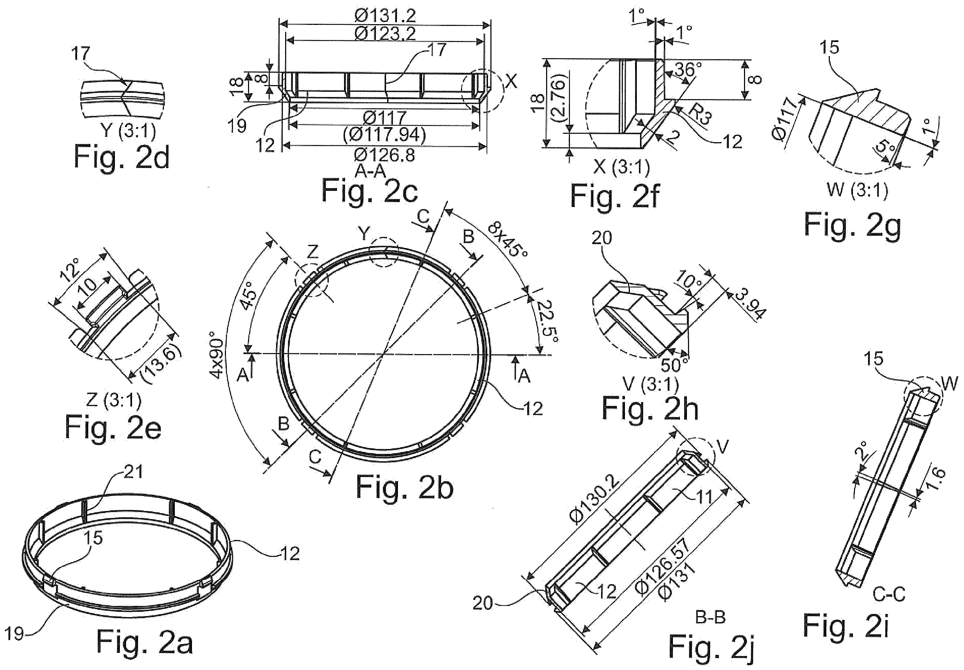

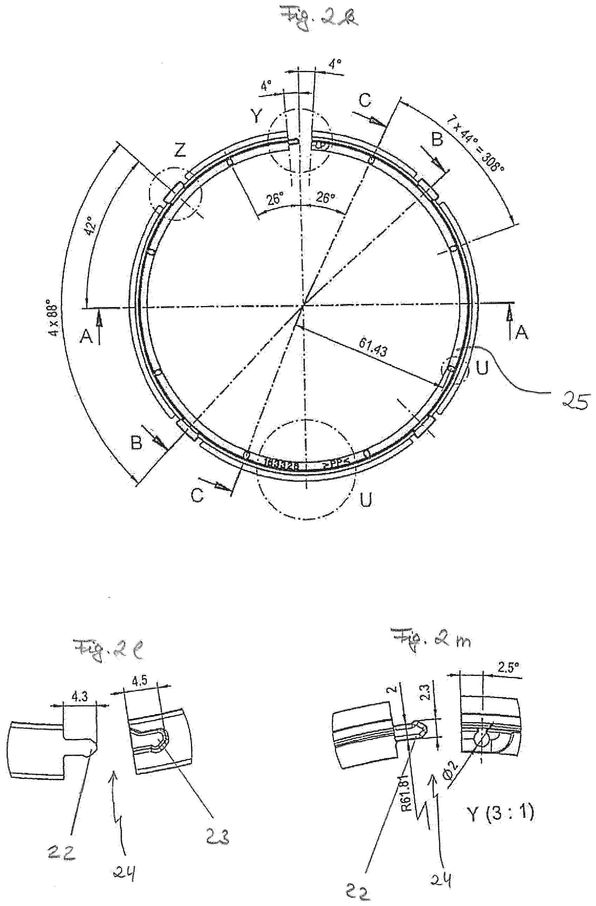

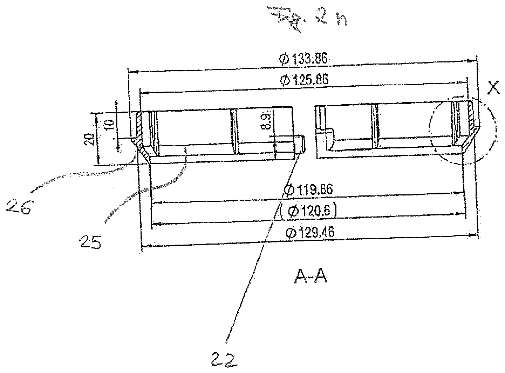

In dem vorliegenden, bevorzugten Ausführungsbeispiel ist das erste, den Befestigungsabschnitt 9 ausbildende Bauteil 10 als einteiliger, umfangsgeschlossener Ring ausgebildet, während, wie sich insbesondere aus den Figuren 2c und 2g ergibt, dass zweite, den Hintergriffabschnitt 11 ausbildende Bauteil 12 als in axialer und radialer Richtung durchgehend geschlitzter, einteiliger Ring ausgebildet ist. Der einzige, in axialer und radialer Richtung durchgehende Schlitz 17 ist in den Figuren 2c und 2d eingezeichnet. Dieser Schlitz 17 ermöglicht ein elastisches Aufbiegen des einteiligen Ringbauteils 12 zum Aufschieben auf das Muffenrohr 2 in radialer Richtung. Ein Aufweiten des geschlitzten, zweiten Bauteils 12 wird durch die axialer Fixierung mit dem bevorzugt, jedoch nicht zwingend einteiligen und umfangsgeschlossenen ersten Bauteil 10 sicher verhindert.

In einem weiteren Ausführungsbeispiel kann das als einteiliger Ring ausgebildete Bauteil 25, wie in den Figuren 2k bis 2n gezeigt, an einem Abschnitt des Rings eine Sicherungseinrichtung 24 mit einem Verbindungselement 22 und einem Aufnahmeelement 23 aufweisen. Durch ein Verbinden des Verbindungselementes 22 mit dem Aufnahmeelement 23 kann der Ring von einem umfangoffenen in einen umfanggeschlossenen Zustand und umgekehrt überführt werden. Dadurch kann das Bauteil 25 beziehungsweise der Ring während einer Vormontage desselben durch Herstellen des umfanggeschlossenen Zustandes gegen eine Verschiebung in eine axiale Richtung vorgesichtert werden. Die Figur 2k zeigt eine Aufsicht des Rings in einem Ausführungsbeispiel in dem umfangoffenen Zustand.

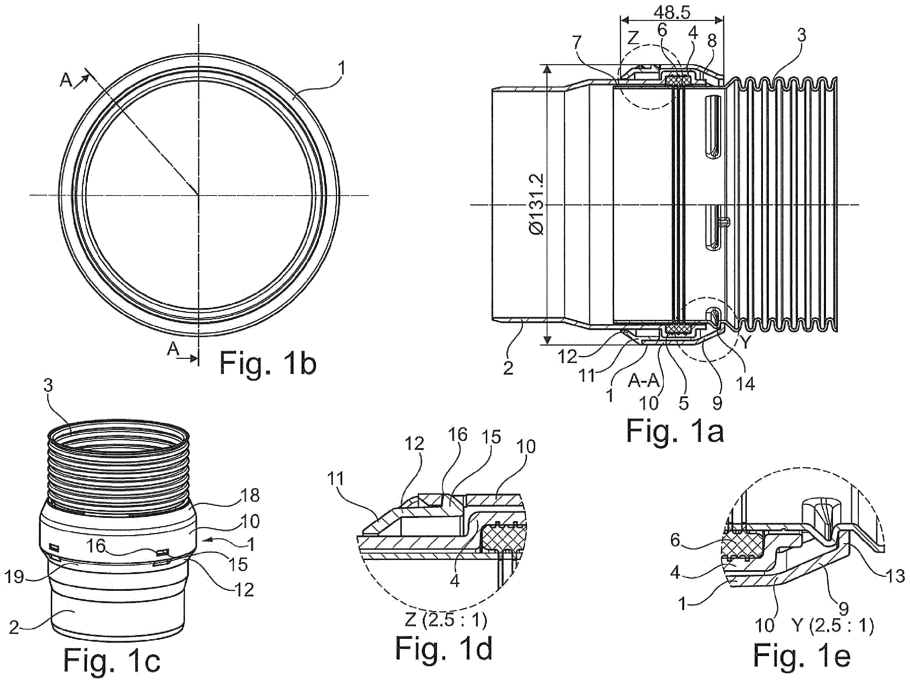

Aus Fig. 1c ergibt sich, dass sich der Sicherungsring 1 in voneinander weg weisende Axialrichtungen im Hinblick auf seinen Außendurchmesser verjüngt. Hierzu umfasst der Sicherungsring 1 sowohl am ersten Bauteil 10 als auch am zweiten Bauteil 12 bzw. 25 einen Konusabschnitt 18, 19 bzw. 26.

Aus den Figuren 2a bis 2i, die teilweise nur in Ausschnitten und teilweise geschnitten das dem Hintergriffabschnitt 11 ausbildende zweite Bauteil 12 zeigen, sind die Umfangsrichtung beabstandete Rastfortsätze 15 zu erkennen. Ebenfalls gezeigt ist ein radial nach Innen geneigter Endabschnitt 20, mit dem der Umfangswulst 4 des Muffenrohres in radialer Richtung nach innen hintergriffen wird.

Aus Fig. 2a ist zu entnehmen, dass das zweite Bauteil 12 in Umfangsrichtung beabstandete, radial innere Abstützstege 21 zum zentrierenden Abstützen am Außenumfang des Muffenrohrs aufweist.

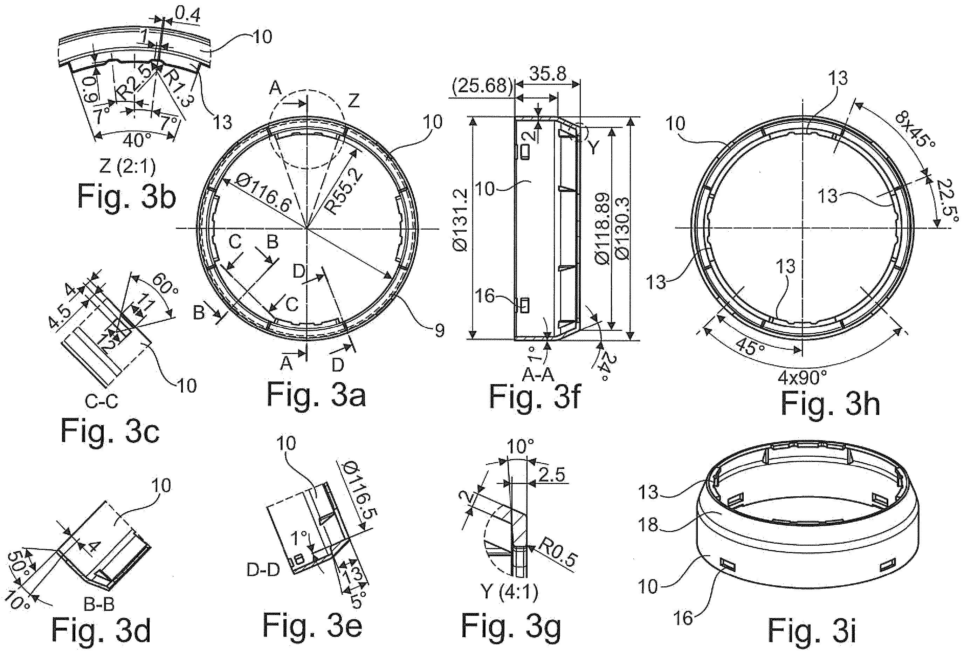

Eine mögliche Gestaltung des den Befestigungsabschnitt 9 ausbildenden ersten Bauteils 10 ist in den Fig. 3a bis 3i gezeigt. Die als Bajonettverschlussmittel ausgebildeten Befestigungsmittel 13, die nach radial innen vorstehen sind besonders gut der Fig. 3h zu entnehmen. Insgesamt ist zu erkennen, dass es sich bei dem ersten Bauteil 10 um ein einteiliges umfangsgeschlossenes Kunststoffbauteil, vorliegend ein Kunststoffspritzgussbauteil handelt. Aus Fig. 3f ergeben sich die Positionen der in Umfangsrichtung beabstandeten, beispielhaft radialen Rastaufnahmen 16 für die Rastfortsätze (Rastfederelemente) des zweiten Bauteils 12.

### Bezugszeichen

- 1: Sicherungsring
- 2: Muffenrohr
- 3: Abgasrohr
- 4: Umfangswulst
- 5: Ringnut
- 6: Lippendichtung
- 7: Glattrohrabschnitt
- 8: Muffenrohröffnung
- 9: Befestigungsabschnitt
- 10: erstes den Befestigungsabschnitt ausbildendes Bauteil
- 11: Hintergriffabschnitt
- 12: zweites den Hintergriffabschnitt ausbildendes Bauteil
- 13: Befestigungsmittel
- 14: Gegenbefestigungsmittel
- 15: Rastfortsätze
- 16: Rastaufnahmen
- 17: Schlitz
- 18: Konusabschnitt
- 19: Konusabschnitt
- 20: Endabschnitt
- 21: Abstützstege
- 22: Verbindungselement
- 23: Aufnahmeelement
- 24: Sicherungseinrichtung
- 25: zweites den Hintergriffabschnitt ausbildendes Bauteil
- 26: Konusabschnitt

## Patentansprüche

1. Sicherungsring (1) zum, insbesondere lösbaren, axialen Sichern eines zumindest abschnittsweise flexiblen Kunststoff-Abgasrohrs an einem einen Umfangswulst (4) aufweisenden Muffenrohr (2), umfassend einen Hintergriffabschnitt (11) zum Hintergreifen des Umfangswulstes (4) am Außenumfang des Muffenrohres (2) nach radial innen sowie einen axial benachbarten, Befestigungsmittel (13) zur formschlüssigen, fixierenden Weichselwirkung mit monolithisch an dem Abgasrohr (3) ausgebildeten Gegenbefestigungsmitteln (14) aufweisenden Befestigungsabschnitt (9) wobei der Befestigungsabschnitt (9) und der Hintergriffabschnitt (11) als voneinander separate, axial über Fixiermittel formschlüssig miteinander verbundene Bauteile (10, 12, 25) ausgebildet sind,
**dadurch gekennzeichnet,**
**dass** das den Hintergriffabschnitt (11) ausbildende Bauteil (12) als axial und radial durchgehend geschlitzter Ring ausgebildet ist oder dass das den Hintergriffabschnitt (11) ausbildende Bauteil (12) mehrere in Umfangsrichtung nebeneinander angeordnete und miteinander verbundene Teilbauteile umfasst und dass die Befestigungsmittel als in Umfangsrichtung beabstandete Bajonettverschlussmittel (13) zum Zusammenwirken mit radialen Gegenbajonettverschlussmitteln (14) des Abgasrohres (3) ausgebildet sind.

2. Sicherungsring (1) nach Anspruch 1,
**dadurch gekennzeichnet,**
**dass** das den Befestigungsabschnitt (9) ausbildende Bauteil (10) als, insbesondere einteiliger, umfangsgeschlossener Ring ausgebildet ist.

3. Sicherungsring (1) nach einem der vorhergehenden Ansprüche, **dadurch gekennzeichnet,**
**dass** das den Hintergriffabschnitt (11) ausbildende Bauteil (25) als insbesondere einteiliger Ring ausgebildet ist, welcher an einem Abschnitt des Rings eine Sicherungseinrichtung (24), umfassend ein Verbindungselement (22) und ein Aufnahmeelement (23), aufweist, mittels derer sich der Ring von einem umfangoffenen Zustand in einen umfanggeschlossenen Zustand und umgekehrt überführen lässt.

4. Sicherungsring (1) nach einem der vorhergehenden Ansprüche, **dadurch gekennzeichnet,**
**dass** sich die Außenkontur des Hintergriffabschnitts (11) und/oder des Befestigungsabschnitts (9) in voneinander weg weisende Axialrichtungen im Hinblick auf die jeweilige Außendurchmesserabmessung, insbesondere konisch, verjüngend ausgebildet sind/ist.

5. Sicherungsring (1) nach einem der vorhergehenden Ansprüche, **dadurch gekennzeichnet,**
**dass** die Fixiermittel monolithisch mit dem Befestigungsabschnitt (9) und/oder dem Hintergriffabschnitt (11) ausgebildete, bevorzugt in Umfangsrichtung beabstandete, axial vorstehende Rastelemente zum Zusammenwirken mit, insbesondere durch eine jeweilige Durchgangsöffnung im Hintergriffabschnitt (11) und/oder im Befestigungsabschnitt (9), zugänglichen, bevorzugt monolithisch mit dem Hintergriffsabschnitt (11) und/oder dem Befestigungsabschnitt (9) ausgebildeten, bevorzugt in Umfangsrichtung beabstandeten, Rastaufnahmen (16) umfassen.

6. Abgasrohrsystem umfassend einen Umfangswulst (4) sowie radial innerhalb des Umfangswulstes (4) eine nach radial innen offene, mit einer elastomeren Lippendichtung (6) ausgefüllte, innere Ringnut (5) aufweisendes Muffenrohr (2), insbesondere aus Kunststoff, sowie einen Sicherungsring (1) nach einem der vorhergehenden Ansprüche,
**dadurch gekennzeichnet,**
**dass** der mehrteilige Sicherungsring (1) mit seinem den Hintergriffsabschnitt (11) ausbildenden Bauteil (12, 25) den Umfangswulst (4) hintergreift.

7. Abgasrohrsystem nach Anspruch 6,
**dadurch gekennzeichnet,**
**dass** an dem Muffenrohr (2) mittels des Sicherungsrings (1) ein mehrere axial beabstandete flexible Biegerohrabschnitte, insbesondere Wellrohrabschnitte, aufweisendes Kunststoff-Abgasrohr axial gesichert ist und hierzu die Bajonettverschlussmittel (13), formschlüssig mit den Gegenbajonettverschlussmitteln (14), des Abgasrohrs (3) zusammenwirkt, wobei das Abgasrohr (3) mit einem endseitigen Glattrohrabschnitt (7) axial in das Muffenrohr (2) eingeschoben ist und die Lippendichtung (6) des Muffenrohrs (2) dichtend am Außenumfang des Glattrohrabschnittes (7) anliegt.

8. Abgasrohrsystem nach Anspruch 7,
**dadurch gekennzeichnet,**
**dass** die Biegerohrabschnitte jeweils über mindestens einen starren Glattrohrabschnitt (7) und/oder mindestens einen Muffenrohrabschnitt voneinander beabstandet sind, wobei das Abgasrohr (3) eine Vielzahl von Glattrohrabschnitten (7) und/oder Biegerohrabschnitten aufweist.

## Claims

1. A retaining ring (1) for the, in particular detachable, axial securing of an at least partially flexible plastic exhaust pipe to a sleeve pipe (2) having a circumferential bead (4), the retaining ring (1) comprising an engagement section (11) for engaging behind the circumferential bead (4) on the outer circumference of the sleeve pipe (2) to the radial inside and comprising an axially adjacent fastening section (9) having fastening means (13) for the form-fitting, fixing interaction with counter fastening means (14) realized in a monolithic manner on the exhaust pipe (3), the fastening section (9) and the engagement section (11) being realized as separate components (10, 12, 25) axially connected to one another in a form-fitting manner via fixation means, **characterized in that**
the component (12) forming the engagement section (11) is realized as a ring which is continuously slotted in the axial and the radial direction or that the component (12) forming the engagement section (11) has several subcomponents which are disposed adjacent to one another in the circumferential direction and which are connected to one another and that the fastening means are realized as bayonet mount means (13) which are spaced apart in the circumferential direction and which serve to interact with radial counter bayonet mount means (14) of the exhaust pipe (3).

2. The retaining ring (1) according to claim 1,
**characterized in that**
the component (10) forming the fastening section (9) is realized as an, in particular one-piece, circumferentially closed ring.

3. The retaining ring (1) according to any one of the preceding claims, **characterized in that**
the component (25) forming the engagement section (11) is realized as an, in particular one-piece, ring which has a securing device (24) comprising a connection element (22) and a reception element (23) at a section of the ring, the ring being transferable from a circumferentially open state into a circumferentially closed state and vice versa by means of the securing device (24).

4. The retaining ring (1) according to any one of the preceding claims, **characterized in that**
the outer contour of the engagement section (11) and/or of the fastening section (9) tapers, in particular conically, in opposite axial directions with respect to the respective outer diameter dimensions.

5. The retaining ring (1) according to any one of the preceding claims, **characterized in that**
the fixation means comprise locking elements which protrude in the axial direction, which are realized in a monolithic manner with the fastening section (9) and/or the engagement section (11), which are preferably spaced apart in the circumferential direction and which are configured to interact with locking receptions (16) which are in particular accessible through a respective passage opening in the engagement section (11) and/or in the fastening section (9), which are preferably realized in a monolithic manner with the engagement section (11) and/or the fastening section (9) and which are preferably spaced apart in the circumferential direction.

6. An exhaust pipe system comprising a circumferential bead (4) and a sleeve pipe (2), in particular made of plastic, having an inner ring groove (5) within the circumferential bead (4), the ring groove (5) being open to the radial inside and being filled with an elastomer lip seal (6), and the exhaust pipe system comprising a retaining ring (1) according to any one of the preceding claims,
**characterized in that**
the multi-piece retaining ring (1) engages behind the circumferential bead (4) by means of the component (12, 25) which forms the engagement section (11).

7. The exhaust pipe system according to claim 6,
**characterized in that**
a plastic exhaust pipe which has several flexible bending pipe sections, in particular corrugated pipe sections, spaced apart in the axial direction is axially secured to the sleeve pipe (2) by means of the retaining ring (1) and that, for this purpose, the bayonet mount means (13) interact with the counter bayonet means (14) of the exhaust pipe (3) in a form-fitting manner, wherein a plain pipe section (7) at the end of the exhaust pipe (3) is axially inserted into the sleeve pipe (2) and the lip seal (6) of the sleeve pipe (2) contacts the outer circumference of the plain pipe section (7) in a sealing manner.

8. The exhaust pipe system according to claim 7,
**characterized in that**
the bending pipe sections are each spaced apart from one another via at least one rigid plain pipe section (7) and/or at least one sleeve pipe section, wherein the exhaust pipe (3) has a plurality of plain pipe sections (7) and/or bending pipe sections.

## Revendications

1. Bague de sécurité (1) pour la fixation axiale, notamment amovible, d'un tuyau d'échappement en plastique, au moins partiellement flexible, à un tuyau de manchon (2) ayant un bourrelet de circonférence (4), la bague de sécurité (1) comprenant une partie d'engagement par l'arrière (11) destinée à s'engager sur le bourrelet de circonférence (4) par l'arrière sur la circonférence extérieure du tuyau de manchon (2) vers l'intérieur radial et une partie de fixation (9) axialement adjacente ayant des moyens de fixation (13) destinés à l'interaction fixante par forme avec des contre-moyens de fixation (14) réalisés de manière monolithique sur le tuyau d'échappement (3), la partie de fixation (9) et la partie d'engagement par l'arrière (11) étant réalisées comme composants (10, 12, 25) séparés et reliés axialement l'un à l'autre par forme par des moyens de fixage,
**caractérisée en ce que**
le composant (12) qui réalise la partie d'engagement par l'arrière (11) est réalisé comme anneau à fentes continues dans le sens axial et radial ou que le composant (12) qui réalise la partie d'engagement par l'arrière (11) comprend plusieurs sous-composants qui sont disposés l'un à côté de l'autre dans la direction circonférentielle et qui sont reliés l'un à l'autre et que les moyens de fixation sont réalisés comme moyens de fermeture à baïonnette (13) destinés à interagir avec des contre-moyens de fermeture à baïonnette (14) radiaux du tuyau d'échappement (3).

2. Bague de sécurité (1) selon la revendication 1,
**caractérisée en ce que**
le composant (10) qui réalise la partie de fixation (9) est réalisé comme anneau, notamment en une pièce, qui est fermé sur la circonférence.

3. Bague de sécurité (1) selon l'une quelconque des revendications précédentes,
**caractérisée en ce que**
le composant (25) qui réalise la partie d'engagement par l'arrière (11) est réalisé comme anneau, notamment en une pièce, qui a un dispositif de sécurité (24) comprenant un élément de liaison (22) et un élément de réception (23) sur une partie de l'anneau et au moyen duquel l'anneau peut être transféré d'un état ouvert sur la circonférence à un état fermé sur la circonférence et vice versa.

4. Bague de sécurité (1) selon l'une quelconque des revendications précédentes,
**caractérisée en ce que**
le contour extérieur de la partie d'engagement par l'arrière (11) et/ou de la partie de fixation (9) sont/est réalisé(s) de manière rétrécissant, notamment de manière conique, dans des directions axiales opposées l'une à l'autre par rapport à la dimension de diamètre extérieur respective.

5. Bague de sécurité (1) selon l'une quelconque des revendications précédentes,
**caractérisée en ce que**
les moyens de fixage comprennent des éléments de verrouillage qui sont réalisés de manière monolithique avec la partie de fixation (9) et/ou avec la partie d'engagement par l'arrière (11), qui sont de préférence espacés dans la direction circonférentielle, qui font saillie dans le sens axial et qui sont destinés à interagir avec des logements de verrouillage (16) qui sont notamment accessibles par une ouverture de passage respective dans la partie d'engagement par l'arrière (11) et/ou dans la partie de fixation (9), qui sont de préférence réalisés de manière monolithique avec la partie d'engagement par l'arrière (11) et/ou avec la partie de fixation (9) et qui sont de préférence espacés dans la direction circonférentielle.

6. Système de tuyau d'échappement comprenant un bourrelet de circonférence (4) et un tuyau de manchon (2), notamment en plastique, ayant une rainure annulaire (5) intérieure dans le bourrelet de circonférence (4) qui est ouverte vers l'intérieur radial et qui est remplie d'un joint à lèvre (6) élastomère, et le système de tuyau d'échappement comprenant un bague de sécurité (1) selon l'une quelconque des revendications précédentes,
**caractérisé en ce que**
la bague de sécurité (1) en plusieurs pièces engage sur le bourrelet de circonférence (4) par l'arrière au moyen de son composant (12, 25) qui réalise la partie d'engagement par l'arrière (11).

7. Système de tuyau d'échappement selon la revendication 6,
**caractérisé en ce**
**qu'**un tuyau d'échappement en plastique qui a plusieurs parties de tuyau de pliage, notamment des parties de tuyau ondulé, espacées dans la direction axiale est fixé au tuyau de manchon (2) dans le sens axial au moyen de la bague de sécurité (1) et que, à cet effet, les moyens de fermeture à baïonnette (13) interagissent par forme avec les contre-moyens de fermeture à baïonnette (14) du tuyau d'échappement (3), dans lequel le tuyau d'échappement (3) est inséré dans le tuyau de manchon (2) dans le sens axial par une partie de tuyau lisse (7) à l'extrémité et le joint à lèvre (6) du tuyau de manchon (2) est en contact étanche avec la circonférence extérieure de la partie de tuyau lisse (7).

8. Système de tuyau d'échappement selon la revendication 7,
**caractérisé en ce que**
les parties de tuyau de pliage sont toujours espacées l'une de l'autre par au moins une partie de tuyau lisse (7) rigide et/ou au moins une partie de tuyau de manchon, dans lequel le tuyau d'échappement (3) a une pluralité de parties de tuyau lisse (7) et/ou de parties de tuyau de pliage.
